# EUROPÄISCHE PATENTANMELDUNG

(11) **EP 2 113 958 A1**
(43) Veröffentlichungstag der Anmeldung: **04.11.2009**
(21) Anmeldenummer: 09003692.2
(22) Anmeldetag: 13.03.2009
(51) Int. Cl.: H01M 6/36, H01M 14/00

(54) **Thermoelektrischer Generator mit Konzentrationselement**

(30) Priorität: 29.04.2008 DE 102008021450
(71) Anmelder: Rolls-Royce Deutschland Ltd & Co KG, 15827 Blankenfelde-Mahlow (DE)
(72) Erfinder: Jahns, Ingo, 12305 Berlin (DE)
(74) Vertreter: Weber, Joachim

(57) **Zusammenfassung**

Die Erfindung bezieht sich auf einen thermoelektrischen Generator (1), umfassend eine erste Elektrode (5) in einer ersten Kammer (11), eine zweite Elektrode (6) in einer zweiten Kammer (14), eine Heizvorrichtung (19) und einen Elektrolytkreislauf, welcher die erste Kammer (11) mit der zweiten Kammer (14) verbindet, wobei der Elektrolytkreislauf, die erste Kammer (11) und die zweite Kammer (14) zur Aufnahme einer Elektrolytlösung (16) ausgebildet sind, und wobei die Heizvorrichtung (19) zum Erwärmen der Elektrolytlösung (16) der ersten Kammer (11) ausgebildet ist

## Beschreibung

Die Erfindung bezieht sich auf einen Generator zur Erzeugung von elektrischem Strom. Insbesondere bezieht sich die Erfindung auf einen Generator für eine Flugzeugturbine.

Luftstrahltriebwerke bestehen aus einem Kompressor, einer Brennkammer und einer Turbine. Um den Wirkungsgrad zu verbessern, ist vorgeschlagen worden, dem Turbinengas Wärme zu entziehen, die den Kompressor über Wärmetauscher zugeführt wird, z.B. US 7,007,487 B2.

Gegenwärtig wird die erforderliche elektrische Energie für den Betrieb des Strahltriebwerks über einen Generator erzeugt. Der Generator wird über ein Getriebe von der Hauptwelle angetrieben und verbraucht dabei Energie.

Aus der Abgasenergie könnte aber auch die elektrische Energie erzeugt werden. Dies würde den thermischen Wirkungsgrad des Zyklusses verbessern. Wenn kein mechanisch angetriebener Generator mehr erforderlich ist, würde sich auch der mechanische Wirkungsgrad verbessern.

Der Erfindung liegt somit die Aufgabe zugrunde, einen Generator zu schaffen, welcher bei einfachem und kostengünstigem Aufbau aus thermischer Energie elektrischen Strom erzeugt.

Erfindungsgemäß wird die Aufgabe durch die Merkmalskombination der unabhängigen Ansprüche gelöst, die Unteransprüche zeigen jeweils weitere vorteilhafte Ausgestaltungen der Erfindung.

Aus der Chemie ist bekannt, dass sich bei Elektrodenpotentialunterschieden elektrische Energie gewinnen lässt. Das gebräuchlichste ist das Daniell-Element, wobei Stoffe mit unterschiedlichen Elektrodenpotentialen elektrisch leitend verbunden werden. Aber auch unterschiedliche Konzentrationen von Elektrolytlösungen (Konzentrationselement) und unterschiedliche Temperaturen erzeugen einen Potentialunterschied. Elektrolytlösungen mit hoher Konzentration und hohen Temperaturen erzeugen ein höheres Elektrodenpotential als Elektrolytlösungen mit geringer Konzentration und niedriger Temperatur.

Diese drei Möglichkeiten der unterschiedlichen Potentialunterschiede können auch kombiniert zur Gewinnung von elektrischer Energie verwendet werden. Dadurch entsteht eine Kombination aus galvanischer Zelle und thermischem Generator.

Somit ist erfindungsgemäß ein thermoelektrischer Generator vorgesehen, welcher eine erste Elektrode in einer ersten Kammer, eine zweite Elektrode in einer zweiten Kammer, eine Heizvorrichtung und einen Elektrolytkreislauf vorsieht. Der Elektrolytkreislauf verbindet die erste mit der zweiten Kammer, wobei sowohl der Elektrolytkreislauf als auch die erste und die zweite Kammer mit einer Elektrolytlösung gefüllt werden. Die Heizvorrichtung dient zu Erwärmen der Elektrolytlösung der ersten Kammer.

Ferner ist erfindungsgemäß eine Gasturbine, insbesondere ein Strahltriebwerk für ein Flugzeug vorgesehen, welche einen zuvor beschriebenen thermoelektrischen Generator umfasst.

Dabei ist es besonders vorteilhaft, die benötigte Wärme, beispielsweise aus dem Abgasstrang der Gasturbine, zu entnehmen. Zur weiteren Steigerung des Wirkungsgrades des thermoelektrischen Generators kann die Elektrolytlösung in einem Bypassluftstrom der Gasturbine gekühlt werden.

Weiterhin ist erfindungsgemäß ein Verfahren zur Erzeugung elektrischen Stroms mit einer ersten Elektrode in einer ersten Kammer einer zweiten Elektrode in einer zweiten Kammer und einem Elektrolytkreislauf, welcher die erste Kammer (11) mit der zweiten Kammer verbindet, vorgesehen. Erfindungsgemäß werden dabei folgende drei Schritte berücksichtigt:

Das System aus den beiden Kammern und dem Elektrolytkreislauf wird mit Elektrolytlösung gefüllt. Die Elektrolytlösung der ersten Kammer wird vor Zuleitung in die Kammer und/oder in der Kammer erwärmt. Ferner wird zumindest teilweise abgekühlte Elektrolytlösung aus der ersten Kammer in die zweite Kammer übergeführt. Vorteilhafterweise wird dabei die Elektrolytlösung aktiv gekühlt.

Im Folgenden wird die Erfindung anhand eines Ausführungsbeispiels in Verbindung mit der Zeichnung beschrieben. Dabei zeigt:
- Fig. 1: eine erfindungsgemäße Gasturbine mit einem erfindungsgemäßen thermoelektrischen Generator, und
- Fig. 2: eine Detailansicht des erfindungsgemäßen thermoelektrischen Generators.

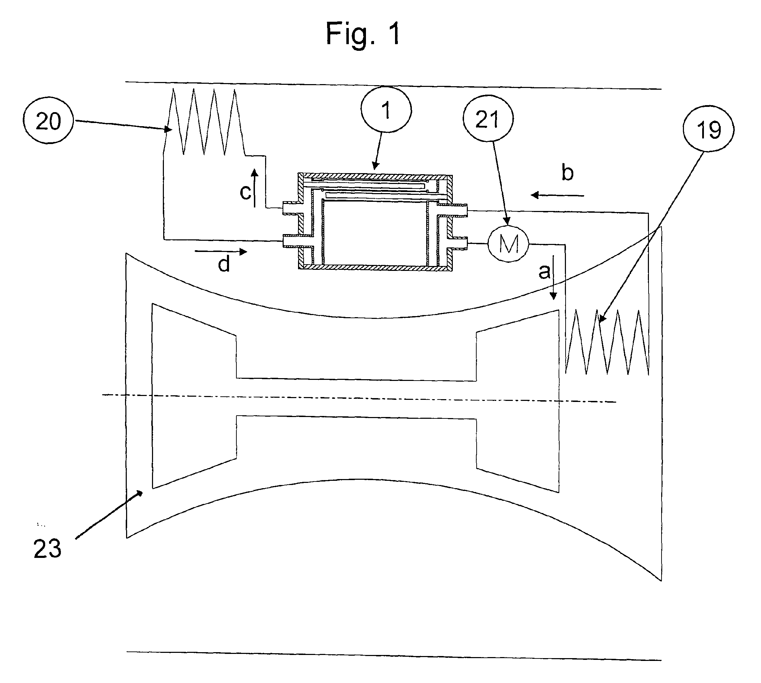

Fig. 1 zeigt eine Flugzeugturbine 23, einen thermoelektrischen Generator 1, Kühlrippen bzw. Wärmetauscher 20, Heizspirale bzw. Wärmetauscher 19 und einen Motor bzw. eine Pumpe 21. Die Heizspirale 19 befindet sich im Abgasstrang des Flugzeugtriebwerks 23. Die Kühlrippen 20 befinden sich in einem Bypassluftstrom der Flugzeugturbine 23. Die Pumpe 21 fördert die Elektrolytlösung in einem Elektrolytkreislauf des thermoelektrischen Generators 1.

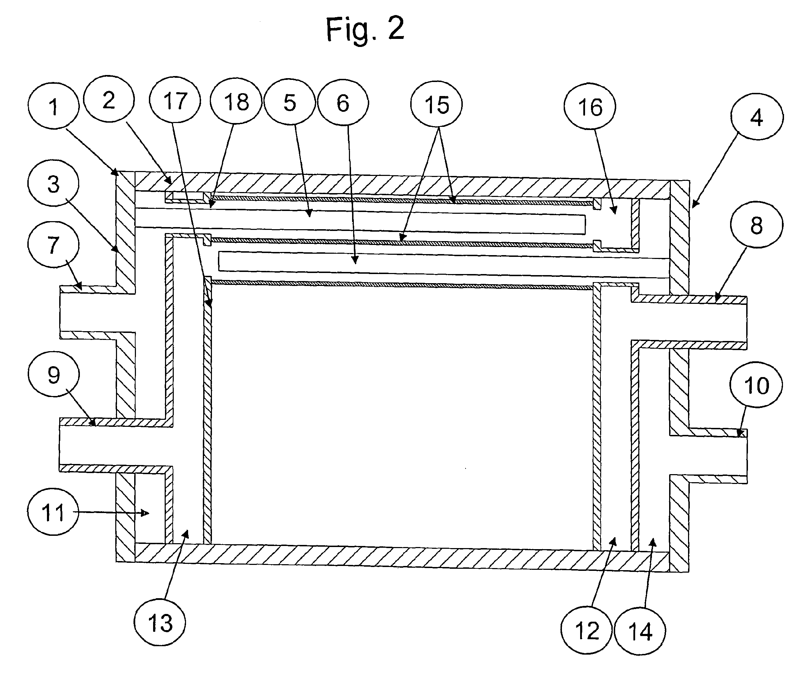

Anhand der Detailansicht des thermoelektrischen Generators 1 wird nun in Fig. 2 die Funktionsweise des Generators beschrieben.

Die Erzeugung des elektrischen Stromes erfolgt im Wärme/Stromerzeuger 1. Außen liegt das Gehäuse 2. In den zwei stirnseitigen Abdeckungen 3, 4 sind auf der innenliegenden Seite multiple Elektroden 5,6 integriert. Auf der äußeren Seite der Abdeckungen 3,4 kann elektrischer Strom abgenommen werden.

Die beiden Abdeckungen 3, 4 werden zur Vermeidung eines Kurzschlusses elektrisch getrennt, z.B. durch Verwendung eines Nichtleiters als Gehäusematerial 2. Die stirnseitigen Enden (Abdeckungen 3,4) weisen jeweils zwei Öffnungen 7,8,9,10 auf, durch die eine Elektrolytlösung 16 strömen kann. Hinter den stirnseitigen Abdeckungen sind jeweils zwei voneinander getrennte Kammern 11,12,13,14 ausgebildet mit jeweils einer Zuströmöffnung 7,8,9,10 von dem stirnseitigen Ende der Abdeckungen 3,4.

Zur Vermeidung von Elektrolytmischung sind die Kammern gegeneinander abgedichtet, z.B. besteht die Wandung 17 aus einem nichtleitenden Material. Selbiges gilt für die Durchtrittsöffnungen 18 der Elektroden 5,6.

In der Mitte des thermoelektrischen Generators 1 liegt ein Diaphragma 15. Dieses ist so ausgebildet, dass eine hohe Packungsdichte der Elektroden erreicht werden kann, z.B. durch eine wabenförmige Ausgestaltung. In diese Waben des Diaphragmas 15 ragen wechselseitig die Elektroden 5,6 hinein und werden vom Elektrolyt 16 umströmt.

Als Elektrodenmaterial kann z.B. Kupfer verwendet werden. Dieses kann als reiner Metallkörper aber auch als Beschichtung auf einem porösen Grundmaterial, zur Vergrößerung der Oberfläche, ausgebildet sein. Die Elektrolytlösung könnte bei einer Kupferelektrode beispielsweise Kupfersulfat sein. Andere Elektroden/Elektrolytlösungen sind erfindungsgemäß ebenso möglich. Auch die Verwendung von Bleioxid wie im Bleiakkumulator wäre denkbar.

Die Gestaltung des erfindungsgemäßen Stromerzeugers erlaubt sowohl eine Gleich- als auch Gegenströmung des Elektrolyts.

Zur Stromerzeugung wird über die stabförmigen Elektroden einer ersten Seite heißes, mit Ionen angereichertes Elektrolyt geleitet, während eine andere Seite mit kaltem, lonenverarmtem Elektrolyt versorgt wird.

Im Anfangszustand ist die Elektrolytlösung im thermoelektrischen Generator 1 ausgeglichen, d.h. gleiche Temperatur, gleiche Konzentration. Das Elektrolyt wird über eine Heizspirale 19 in der Turbine erwärmt und den Elektrodenstäben 5 zugeführt. Dadurch hat diese Zelle ein höheres Elektrodenpotential. Die Elektrode nimmt dabei Kupferionen auf. Die Konzentration der Kupferionen in der Elektrolytlösung wird daraufhin geringer. Die verarmte/warme Elektrolytlösung fließt auf der anderen Seite des thermoelektrischen Generators 1 heraus und wird über Kühlrippen 20 (z.B. im Bypassluftstrom) abgekühlt. Dieses verarmte kalte Elektrolyt wird nun den anderen Elektrodenstäben 6 zugeführt. Dieses hat somit ein geringes Elektrodenpotential. Kupfer geht unter Abgabe von Elektronen in Lösung. Die Elektronen wandern über den elektrischen Schaltkreis zur gegenüberliegenden Elektrode 5 und dienen dort zur Anlagerung von Kupfer an der Elektrode. Das kalte mit Ionen angereicherte Elektrolyt fließt auf der anderen Seite des thermoelektrischen Generators 1 heraus. Dieses wird wiederum über die Heizspirale 19 erwärmt. Der Kreislauf beginnt von vorne. Zum elektrischen Ausgleich werden Sulfationen über das Diaphragma 15 ausgetauscht.

Der Kreislauf kann passiv, d.h. ohne Motor angetrieben werden. Durch den Aufbau eines Druckes über eine Pumpe 21 vor der Erhitzung des Elektrolyts kann jedoch die Siedetemperatur hochgesetzt werden. Das Elektrolyt kann daher mehr Wärme aufnehmen.

Durch ein vollständiges Auflösen der Elektroden würde der Kreislauf unterbrochen. Um dies zu verhindern, sind die Zuleitungen mit Relais/Ventilen 22 ausgestattet, die abwechselnd warmes und kaltes Elektrolyt über die Elektroden leitet, so dass die Elektroden 5,6 abwechselnd auf- und abgebaut werden. Die erfindungsgemäße Anlage ermöglicht es somit, auch Wechselstrom zu erzeugen, jedoch nur mit geringer Frequenz.

Somit lässt sich die Funktionsweise des thermoelektrischen Generators anhand der vier Pfeile A, B, C, D aus Fig. 1 wie folgt darstellen:

Kalte Elektrolytlösung mit hoher Konzentration von Kupferionen (A) fließt in die Heizspirale 19, wird dort erwärmt und fließt als heiße Elektrolytlösung mit hoher Konzentration von Kupferionen (B) in den thermoelektrischen Generator. Aus diesem thermoelektrischen Generator 1 fließt die heiße Elektrolytlösung mit geringer Konzentration von Kupferionen (C) in die Kühlrippen 20 und wird dort abgekühlt. Daraufhin fließt kalte Elektrolytlösung mit geringer Konzentration von Kupferionen (D) in den thermoelektrischen Generator 1.

Somit zeigt die Erfindung mit einer Kombination aus galvanischer Zelle und thermischem Element einen effektiven Generator zur Erzeugung elektrischen Stroms. Dieser Generator ist besonders in Verbindung mit der Nutzung der Abgaswärme eines Triebwerks vorteilhaft einsetzbar.

### Bezugszeichenliste

- 1: Wärme-/Stromerzeuger
- 2: Gehäuse
- 3,4: stirnseitige Abdeckung
- 5,6: Elektrode
- 7-10: Öffnung/Zuströmöffnung
- 11-14: Kammer
- 15: Diaphragma
- 16: Elektrolytlösung
- 17: Wandung
- 18: Durchtrittsöffnung
- 19: Heizspirale/Wärmetauscher
- 20: Kühlrippe/Wärmetauscher
- 21: Pumpe
- 22: Ventil/Relais
- 23: Gasturbine

## Patentansprüche

1. Thermoelektrischer Generator (1), umfassend eine erste Elektrode (5) in einer ersten Kammer (11), eine zweite Elektrode (6) in einer zweiten Kammer (14), eine Heizvorrichtung (19) und einen Elektrolytkreislauf, welcher die erste Kammer (11) mit der zweiten Kammer (14) verbindet, wobei der Elektrolytkreislauf, die erste Kammer (11) und die zweite Kammer (14) zur Aufnahme einer Elektrolytlösung (16) ausgebildet sind, und wobei die Heizvorrichtung (19) zum Erwärmen der Elektrolytlösung (16) der ersten Kammer (11) ausgebildet ist.

2. Thermoelektrischer Generator nach Anspruch 1, **dadurch gekennzeichnet, dass** die erste Kammer (11) zumindest teilweise von der zweiten Kammer (14) durch ein Diaphragma (15) getrennt ist.

3. Thermoelektrischer Generator nach Anspruch 1 oder 2, **dadurch gekennzeichnet, dass** die erste Kammer (11) und/oder die zweite Kammer (14) eine Gehäuse (2) des thermoelektrischen Generators (1) bilden.

4. Thermoelektrischer Generator nach einem der vorhergehenden Ansprüche, **dadurch gekennzeichnet, dass** die Heizvorrichtung (19) einen Heizkreislauf im Elektrolytkreislauf umfasst.

5. Thermoelektrischer Generator nach einem der vorhergehenden Ansprüche, **dadurch gekennzeichnet, dass** der Elektrolytkreislauf einen Kühlkreislauf (20) umfasst.

6. Thermoelektrischer Generator nach einem der vorhergehenden Ansprüche, **dadurch gekennzeichnet, dass** der Elektrolytkreislauf eine Pumpe (21), insbesondere im Heizkreislauf, umfasst.

7. Thermoelektrischer Generator nach einem der vorhergehenden Ansprüche, **dadurch gekennzeichnet, dass** der Elektrolytkreislauf zumindest ein Ventil, insbesondere ein relaisgesteuertes Ventil, umfasst, um die Elektrolytlösung (16) zu steuern.

8. Thermoelektrischer Generator nach einem der vorhergehenden Ansprüche, **dadurch gekennzeichnet, dass** die erste Elektrode (5) und/oder die zweite Elektrode (6) eine poröse und somit vergrößerte Oberfläche aufweist.

9. Thermoelektrischer Generator nach einem der vorhergehenden Ansprüche, **dadurch gekennzeichnet, dass** der thermoelektrische Generator (1) mehrere erste Elektroden (5) und/oder mehrerer zweite Elektroden (6) umfasst.

10. Gasturbine (23), insbesondere Flugzeugturbine, umfassend einen thermoelektrischen Generator (1) nach einem der vorhergehenden Ansprüche.

11. Gasturbine nach Anspruch 10, **dadurch gekennzeichnet, dass** der Heizkreislauf ausgebildet ist, die Elektrolytlösung (16) mittels der Gasturbine (23) zu erwärmen.

12. Gasturbine nach einem der Ansprüche 10 oder 11, **dadurch gekennzeichnet, dass** der Kühlkreislauf (20) ausgebildet ist, die Elektrolytlösung (16) mittels eines Bypassluftstroms der Gasturbine (23) zu kühlen.

13. Verfahren zur Erzeugung elektrischen Stroms mit einer ersten Elektrode (5) in einer ersten Kammer (11), einer zweiten Elektrode (6) in einer zweiten Kammer (14) und einem Elektrolytkreislauf, welcher die erste Kammer (11) mit der zweiten Kammer (14) verbindet, umfassend die Schritte
- Füllen der ersten Kammer (11) und der zweiten Kammer (14) mit einer Elektrolytlösung (16),
- Erwärmen der Elektrolytlösung (16) der ersten Kammer (11), und
- Weiterleiten der abgekühlten Elektrolytlösung (16) in die zweite Kammer (14).
